# FASCICULE DE BREVET EUROPEEN

(11) **EP 0 532 389 B1**
(45) Date de publication et mention de la délivrance du brevet: **15.11.1995**
(21) Numéro de dépôt: 92402403.7
(22) Date de dépôt: 03.09.1992
(51) Int. Cl.: G02B 6/44

(54) **Dispositif d'insertion de rubans à fibres optiques dans les rainures hélicoidales d'un jonc rainuré**
Vorrichtung zur Einbringung von optischen Faserbändern in die schraubenlinienförmigen Nuten eines Trogelements
Device for inserting optical fibre ribbon into the spiral grooves of a spacer

(30) Priorité: 09.09.1991 FR 9111109
(43) Date de publication de la demande: 17.03.1993
(73) Titulaire: ALCATEL CABLE, 92111 Clichy Cédex (FR)
(72) Inventeur: Bonicel, Jean-Pierre, F-69005 Lyon (FR); Knes, Jean-Luc, F-69250 Fleurieu sur Saone (FR)
(74) Mandataire: Pothet, Jean Rémy Emile Ludovic

(56) Documents cités:
- EP-A- 0 242 775
- US-A- 4 329 018

## Description

La présente invention concerne un dispositif d'insertion de rubans à fibres optiques dans les rainures hélicoïdales d'un jonc rainuré. Elle s'applique notamment à la fabrication de câbles à fibres optiques à jonc rainuré.

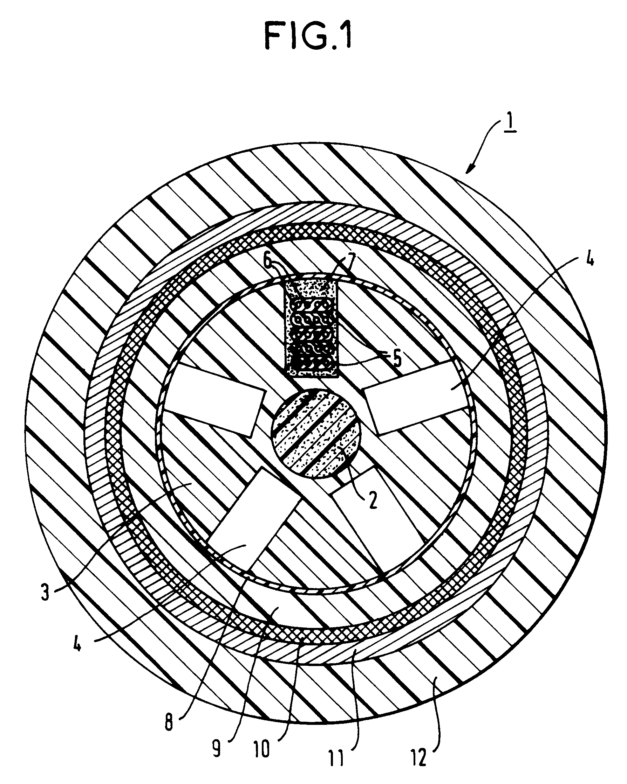

Un tel câble est représenté, en coupe transversale, en figure 1. Le câble 1 comprend un porteur central 2 en un matériau diélectrique, inséré à l'intérieur d'un jonc rainuré 3 comportant par exemple cinq rainures hélicoïdales 4. Chacune des rainures 4 contient, empilés les uns sur les autres, cinq rubans 5, contenant chacun quatre fibres optiques 6. Les rubans 5 sont noyés dans les rainures 4, dans un composé de remplissage 7 comme une graisse de silicone par exemple. Autour du jonc 3 est ensuite rubanné un ruban de polyester 8. Puis on trouve, autour du ruban 8 et disposés coaxialement de l'intérieur vers l'extérieur, une gaine de polyuréthane 9, un tressage 10 de mèches de renfort mécanique constituées par exemple de fibres d'aramide, un écran d'acier 11 et une gaine extérieure 12 en polyéthylène. La structure de ce câble est donnée à titre d'exemple et de manière non limitative.

On connaît actuellement un dispositif destiné à l'insertion des rubans à fibres optiques dans les rainures hélicoïdales du jonc rainuré. Ce dispositif comprend, de manière schématique, un socle sur lequel est disposé un moteur pouvant entraîner en rotation un support circulaire sur lequel sont montées autant de bobines d'approvisionnement en rubans que nécessaires. Le jonc rainuré dans lequel doivent être insérés les différents rubans provenant des bobines d'approvisionnement est entraîné en translation le long de son axe longitudinal, par un moyen approprié, et traverse le support circulaire tournant par une ouverture prévue à cet effet au centre du support. Le jonc rainuré traverse ensuite un plateau circulaire disposé en vis-à vis du support et comportant cinq ouvertures circulaires situées en périphérie du plateau autour d'une ouverture centrale par laquelle passe le jonc et destinées à recevoir chacune les cinq rubans à insérer dans l'une des rainures du jonc rainuré. Les rubans sont donc en contact les uns avec les autres dans chacune des ouvertures du plateau. Bien entendu, le plateau est en rotation autour de l'axe du jonc rainuré dans le même sens que le support. Enfin, le dispositif comprend une filière dite filière de commettage disposée en vis-à-vis du plateau et comportant également cinq ouvertures circulaires situées autour et à proximité d'une ouverture centrale par laquelle passe le jonc rainuré, et destinées à recevoir chacune cinq rubans, en contact les uns avec les autres. De plus, la filière est entraînée en rotation autour de l'axe du jonc et dans le même sens que le support. Les rubans sont ainsi insérés dans les rainures du jonc, qui est animé à cet effet d'un mouvement de rotation autour de son axe longitudinal dans le sens inverse du sens de rotation de la filière, du plateau et du support. Une fois les rubans insérés, le jonc est gainé puis subit toutes les opérations nécessaires à la finition du câble qui est ensuite enroulé sur un bobinoir, par exemple.

Un tel dispositif pose un certain nombre de problèmes.

En effet, les rubans étant empilés dans les rainures, le ruban le plus proche de l'axe du jonc rainuré est nécessairement plus court que celui qui lui est superposé et ainsi de suite. Or, les rubans destinés à une même rainure sont maintenus ensemble au niveau du plateau puis de la filière. Ainsi, étant données les différences de longueur entre ces rubans, leurs vitesses relatives entre leur point de convergence au niveau du plateau et la rainure du jonc dans laquelle ils doivent être insérés sont différentes. Notamment, le vitesse linéaire d'un point du ruban de fond de rainure au passage à travers le plateau est inférieure à celle du point correspondant du ruban qui lui est superposé, et ainsi de suite. Ces différences de vitesses entre les rubans d'une même rainure provoquent, du fait du contact entre ces rubans en mouvement, un entrainement des rubans les plus lents par les rubans les plus rapides. Ceci crée des surlongueurs sur les rubans de fond de rainure, qui se traduisent par un bouclage de ces rubans à l'intérieur des rainures. Ces bouclages entraînent une augmentation de l'atténuation du câble et donc une baisse de ses performances de transmission.

En outre, tous les rubans ayant les mêmes dimensions et étant rassemblés ensemble dans des ouvertures circulaires, certains des rubans se trouvent soumis à des contraintes latérales par friction contre les bords des ouvertures.

Enfin, les rubans étant introduits ensemble dans la filière puis dans les rainures, ils risquent de s'entrecroiser et d'être mal disposés dans les rainures, ce qui applique aux fibres des contraintes supplémentaires entraînant des pertes de transmission.

Un but de la présente invention est donc de réaliser un dispositif d'insertion de rubans de fibres optiques dans les rainures d'un jonc rainuré qui n'entraîne pas de contraintes différentielles sur les rubans et d'augmentation préjudiciable de l'atténuation du câble.

Un autre but de la présente invention est de réaliser un tel dispositif évitant d'appliquer des contraintes latérales aux rubans avant leur insertion dans les rainures.

La présente invention propose à cet effet un dispositif d'insertion de rubans à fibres optiques dans les rainures hélicoïdales d'un jonc rainuré entraîné en translation le long de son axe longitudinal à travers ledit dispositif, chacune desdites rainures étant destinée à recevoir au moins deux rubans empilés l'un sur l'autre, ledit dispositif comportant :
- un support de bobines animé d'un mouvement de rotation relatif par rapport audit jonc, autour dudit axe longitudinal,
- une pluralité de bobines d'approvisonnement en rubans montées sur ledit support,
- un plateau disposé en aval dudit support de bobines, également animé d'un mouvement de rotation relatif par rapport audit jonc, autour dudit axe longitudinal et dans le même sens que ledit support, et traversé par ledit jonc en translation et par lesdits rubans provenant desdites bobines,
- une filière disposée en aval dudit plateau, également animée d'un mouvement de rotation relatif par rapport audit jonc autour dudit axe longitudinal et dans le même sens que ledit support et ledit plateau, et traversée par ledit jonc en translation et par lesdits rubans provenant dudit plateau, lesdits rubans étant insérés dans lesdites rainures en aval de ladite filière, caractérisé en ce que ledit plateau et ladite filière présentent des ouvertures individuelles de passage pour chacun desdits rubans les traversant.

Grâce au dispositif selon l'invention, les différents rubans à insérer traversent le dispositif d'insertion indépendamment les uns des autres jusqu'à leur insertion dans les rainures. Ceci permet de diminuer les contraintes différentielles appliquées aux rubans par les dispositifs de l'art antérieur.

De manière avantageuse, les rubans sont inclinés par rapport à l'axe longitudinal du jonc et par rapport au plateau et à la filière.

Selon un mode de réalisation possible, le plateau est à symétrie de révolution autour de l'axe longitudinal de rotation et comporte une ouverture centrale, appartenant à cet axe, pour le passage du jonc en translation longitudinale, et autant de séries d'ouvertures que de rainures du jonc à pourvoir de rubans. Chacune de ces séries comprend au moins autant d'ouvertures que le nombre maximal de rubans pouvant être empilés dans une rainure. Enfin, les séries sont régulièrement réparties autour de l'ouverture centrale.

Cette disposition permet aux rubans de traverser le plateau indépendamment les uns des autres.

Avantageusement, les ouvertures d'une même série peuvent être alignées, par exemple en partant de la périphérie du plateau, le long d'une droite passant par le centre du plateau.

Cette réalisation permet de recevoir les rubans sans leur imposer de courbure trop importante risquant de dégrader les performances des fibres optiques qu'ils contiennent.

Dans ce but également, les ouvertures sont circulaires et se prolongent à l'intérieur du plateau par des canaux cylindriques de passage des rubans; les axes de ces canaux sont inclinés par rapport à l'axe longitudinal de manière à recevoir les rubans en provenance des bobines avec une orientation qui soit sensiblement la même que celle qu'ils ont à la sortie des bobines ou que celle qu'ils auront à l'arrivée dans les rainures. Les canaux d'une même série forment ainsi un faisceau divergent en direction du support.

Selon une caractéristique importante, la filière est à symétrie de révolution autour de l'axe longitudinal de rotation, et comporte une ouverture centrale, appartenant à cet axe, pour le passage du jonc en translation longitudinale, et autant de grilles que de rainures du jonc à pourvoir de rubans.

Chacune de ces grilles comporte au moins autant de passages que le nombre maximal de rubans pouvant être empilés dans une rainure, les passages d'une grille étant disposés les uns à la suite des autres. Enfin, les grilles sont réparties régulièrement autour de l'ouverture centrale.

Tout comme la réalisation du plateau, celle de la filière permet aux rubans de la traverser indépendamment les uns des autres.

Avantageusement, chacune des grilles précédentes est constituée de deux piges cylindriques latérales parallèles et d'autant de piges cylindriques transversales que nécessaires pour former le nombre de passages requis.

Ainsi, les passages ont des formes arrondies sur leurs bords, ce qui permet de ne pas abîmer les rubans lorsqu'ils traversent la filière.

Par ailleurs, les dimensions des passages des grilles peuvent être sensiblement égales à celles de la section transversale des rubans. Les rubans sont alors mieux guidés vers les rainures correspondantes.

En outre, chacune des grilles peut présenter une symétrie par rapport à un axe parallèle aux piges latérales et situé entre ces dernières à égale distance entre elles. Cet axe ne passe pas par le centre de la filière, de sorte que les rubans sont dirigés, à la sortie de la filière, dans la direction des rainures. Par exemple, l'axe de symétrie de chacune des grilles peut faire avec l'axe de symétrie de la grille voisine un angle inférieur à /2, cet angle étant compté positivement dans le sens de rotation relatif de la filière.

L'insertion des rubans dans les rainures peut se produire, selon une première méthode, par rotation du jonc autour de son axe longitudinal, le support, le plateau et la filière étant alors immobiles.

Selon une seconde méthode possible, cette insertion peut se produire par rotation du support, du plateau et de la filière autour de l'axe longitudinal, le jonc étant alors immobile en rotation.

D'autres caractéristiques et avantages de la présente invention apparaîtront dans la description qui suit d'un dispositif selon l'invention, donnée à titre illustratif et nullement limitatif.

Dans les figures suivantes :
- la figure 1 représente en coupe transversale un câble à jonc rainuré dans lequel sont insérés des rubans à fibres optiques,
- la figure 2 représente une vue très schématique en élévation d'un dispositif selon l'invention,
- la figure 3 est une vue de face détaillée du plateau du dispositif représenté en figure 2,
- la figure 4 est une demi-coupe selon la ligne IV-IV de la figure 3,
- la figure 5 est une vue de face détaillée de la filière de commettage du dispositif représenté en figure 2.

Dans ces figures, les éléments communs portent les mêmes numéros de référence.

La figure 1 a été décrite lors de la présentation de l'état de la technique.

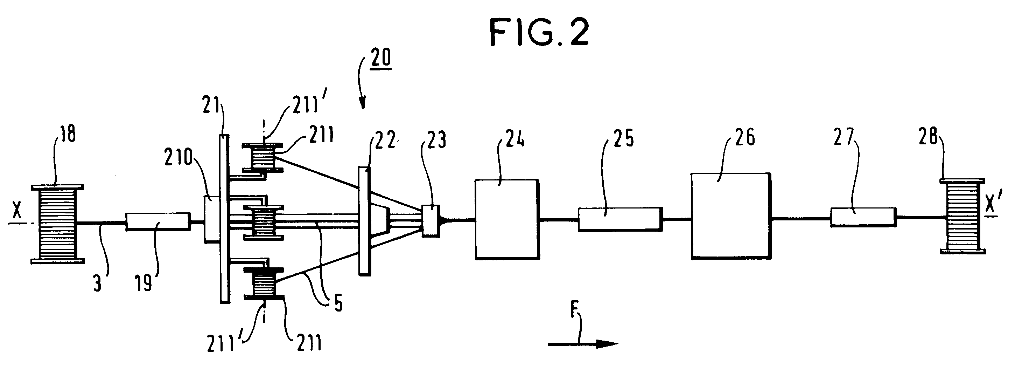

La figure 2 représente schématiquement un dispositif selon l'invention. Ce dispositif 20, destiné à insérer trois rubans 5 dans chaque rainure du jonc 3, comporte un support circulaire 21, un plateau 22 et une filière de commettage 23. On qualifiera d'"amont" toute partie du dispositif 20 située en arrière d'un élément de ce dispositif par rapport au sens de défilement, indiqué par la flèche F, du jonc rainuré 3. De même, on qualifiera d'"aval" toute partie du dispositif 20 située en avant d'un élément de ce dispositif par rapport au sens de défilement.

On trouve en outre, en amont du support 21, une bobine 18 d'approvisionnement en jonc rainuré 3 et un dispositif de freinage 19 du jonc 3. La filière 23 est suivie d'une première tête à rubanner 24 permettant de déposer sur le jonc 3 le ruban de polyester 8, d'un dispositif de remplissage 25 permettant de remplir les rainures 4 d'un composé de remplissage, de moyens (non représentés) destinés à déposer autour du ruban 8 la gaine de polyuréthane 9, le tressage 10 et l'écran d'acier 11. On trouve ensuite une deuxième tête à rubanner 26 pour le rubannage de la gaine extérieure 12. Le câble ainsi terminé est ensuite tiré par un dispositif de traction 27 et amené vers un bobinoir de réception 28 sur lequel il est enroulé.

Le support 21 est monté sur un socle 210 sur lequel est disposé un moteur (non représenté) pouvant entraîner en rotation le support 21 autour d'un axe longitudinal X-X′. Dans l'exemple choisi, quinze bobines 211 d'approvisonnement en rubans 5 sont montées sur le support 21. Pour des raisons de clarté, seules trois des bobines 211 sont représentées schématiquement en figure 2. Chacune des bobines 211 peut bien évidemment tourner autour de son axe longitudinal 211′ afin de dévider le ruban 5.

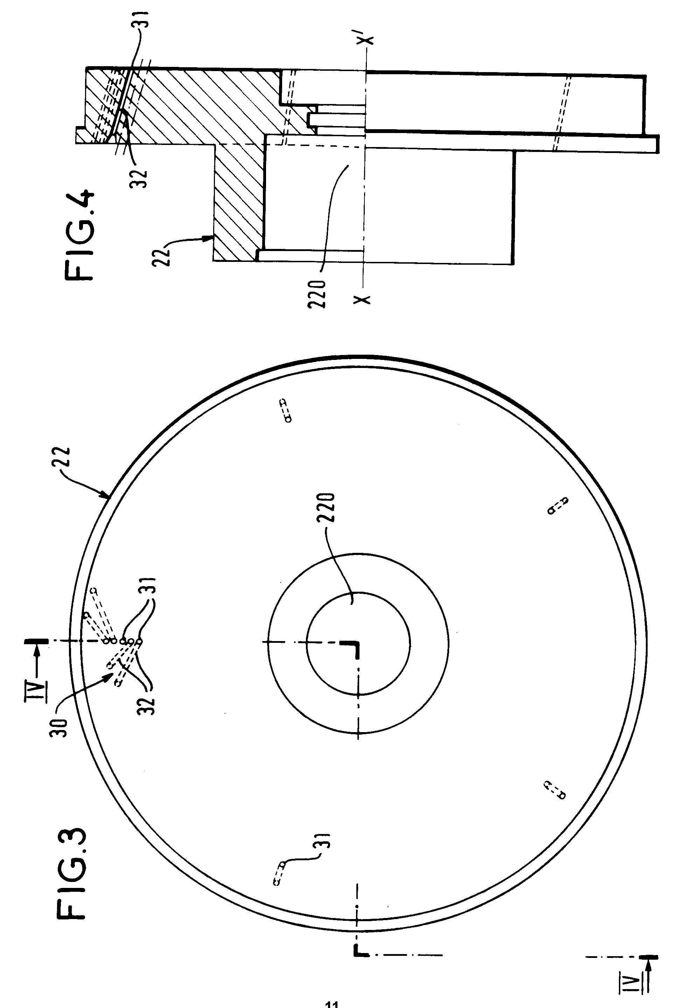

Le jonc rainuré 3 est entraîné par le dispositif 27 en translation le long de l'axe X-X′ et traverse le support 21 par une ouverture prévue à cet effet. En aval du support 21 , il traverse le plateau 22 par une ouverture centrale 220 (voir figure 3); le plateau 22 peut également être mis en rotation autour de l'axe longitudinal X-X′ dans le même sens que le support 21.

Selon l'invention et comme cela est visible aux figures 3 et 4, le plateau 22 comporte cinq séries 30 de cinq ouvertures circulaires 31 chacune. Ces cinq séries sont réparties régulièrement autour de l'ouverture centrale 220. Dans chacune de ces séries, les ouvertures 31 sont disposées le long d'un rayon et en partant de la périphérie du plateau 22. Chacune des ouvertures 31 est destinée à recevoir un ruban optique 5. Les rubans 5 traversent donc le plateau 22 indépendamment les uns des autres, chacun à sa vitesse.

De plus, les ouvertures 31 sont prolongées dans le plateau 22 par des canaux cylindriques 32 dont les axes sont inclinés par rapport à l'axe X-X′ de sorte que les rubans pénétrent dans les alésages 32 avec sensiblement la même orientation par rapport à l'axe X-X′ que celle qu'ils ont à la sortie des bobines d'approvisionnement ou que celle qu'ils auront en arrivant dans les rainures. Les canaux 32 d'une même série d'ouvertures 31 forment ainsi un faisceau divergent d'aval en amont, c'est-à-dire en direction des bobines 211.

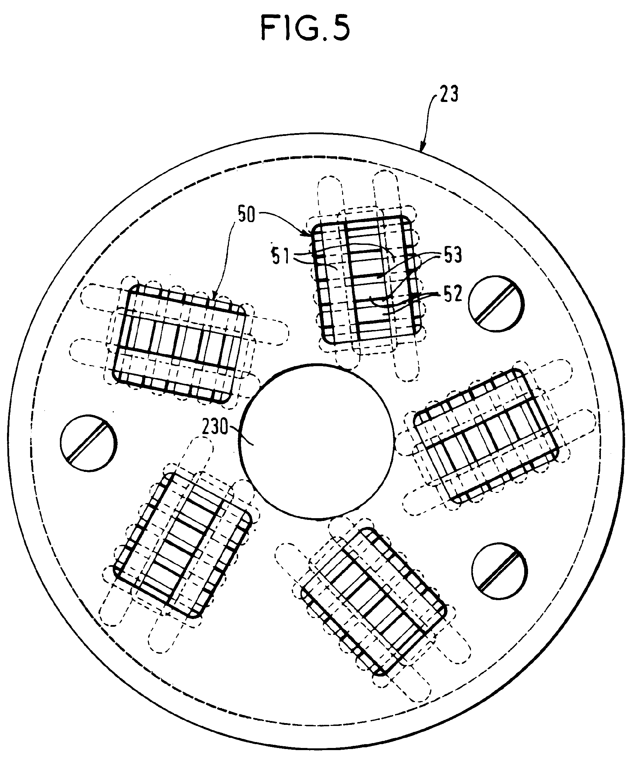

Enfin, en aval du plateau 22, le jonc rainuré 3 traverse la filière de commettage 23 par une ouverture centrale 230 (voir figure 5); la filière 23 peut être mise en rotation autour de l'axe X-X′ dans le même sens que le support 21.

Toujours selon l'invention, on voit en figure 5 que la filière 23 comprend cinq grilles rectangulaires 50 réparties régulièrement autour de l'ouverture centrale 230. Chacune des grilles 50 est plus particulièrement constituée de deux piges cylindriques latérales 51 en acier poli et de six piges cylindriques transversales 52 également en acier poli (orthogonales aux piges 51). Cette structure délimite donc cinq passages 53 de forme globalement rectangulaire avec des bords arrondis vers l'intérieur. Chacun des passages 53 peut ainsi recevoir un ruban 5. Les rubans 5 traversent donc la filière 23 indépendamment les uns des autres, et le restent jusqu'à leur insertion, à proximité de la filière 23 et en aval de cette dernière, dans les rainures 4 du jonc 3. En outre, l'axe de symétrie longitudinal de chacune des grilles 52 (axe parallèle à l'une des piges latérales 51) est incliné par rapport au rayon de la filière 23. Ainsi, l'axe de symétrie de chaque grille 52 est incliné par rapport à l'axe de symétrie de la grille voisine d'un angle inférieur à π/2, cet angle étant compté positivement dans le sens de rotation de la filière 23. Ceci permet d'insérer les rubans 5 dans les rainures 4 en leur appliquant une torsion réduite par rapport au cas où l'axe longitudinal des grilles 52 est radial. On réduit d'autant les contraintes imposées aux fibres optiques contenues dans les rubans.

Etant donné que les grilles 52 sont plus proches de l'axe X-X′ que les séries 30 d'ouvertures 31, les rubans 5 sont inclinés par rapport à l'axe X-X′ de sorte qu'ils convergent vers ce dernier en aval de la filière 23. L'inclinaison donnée aux rubans 5 évite de leur faire subir trop de contraintes.

Grâce au dispositif selon l'invention les passages des différents rubans dans les plateaux et filières sont individualisés : les différents rubans sont dissociés les uns des autres jusqu'à leur insertion dans les rainures du jonc. Ils peuvent donc se déplacer, entre les bobines d'approvisonnement et le point de commettage, indépendamment les uns des autres et donc chacun à sa vitesse. Ils arrivent ainsi dans les rainures en ayant tous le même état de tension mécanique. Les problèmes posés par les dispositifs de l'art antérieur sont donc résolus.

De plus, la structure de la filière de commettage avec ses grilles constituées de piges cylindriques en acier poli permet aux rubans de traverser la filière sans risque d'endommagement, et d'être guidés très précisément dans les rainures (guidage latéral grâce aux piges latérales). Les dimensions des passages ainsi réalisés sont très légèrement supérieures à celles des rubans (0,5 x 1,5 mm pour les passages, avec des piges de 0,5 à 1,5 mm de diamètre, et 0,4 x 1,2 mm pour des rubans contenant quatre fibres optiques par exemple).

Bien entendu, le dispositif selon l'invention n'est pas limité au mode de réalisation qui vient d'être décrit.

En particulier, les différentes valeurs numériques données ne constituent qu'un exemple non limitatif.

De plus, le plateau peut comporter, à la place des séries d'ouvertures, des grilles de passage semblables à celles de la filière de commettage. Une telle disposition n'est cependant pas nécessaire au niveau du plateau, d'autant plus qu'elle est d'une réalisation onéreuse.

Par ailleurs, le dispositif d'insertion peut être soit à support, plateau et filière tournants, comme celui précédemment décrit, soit à support plateau et filière fixes avec bobinoirs d'émission et de réception tournants, c'est-à-dire avec jonc en rotation autour de son axe longitudinal.

## Revendications

1. Dispositif d'insertion de rubans (5) à fibres optiques dans les rainures hélicoïdales d'un jonc rainuré (3) entraîné en translation le long de son axe longitudinal (X-X′) à travers ledit dispositif, chacune desdites rainures étant destinée à recevoir au moins deux rubans empilés l'un sur l'autre, ledit dispositif comportant :
- un support de bobines (21) animé d'un mouvement de rotation relatif par rapport audit jonc (3), autour dudit axe longitudinal,
- une pluralité de bobines d'approvisonnement (211) en rubans (5) montées sur ledit support (21),
- un plateau (22) disposé en aval dudit support de bobines, également animé d'un mouvement de rotation relatif par rapport audit jonc (3), autour dudit axe longitudinal et dans le même sens que ledit support (21), et traversé par ledit jonc (3) en translation et par lesdits rubans (5) provenant desdites bobines (21),
- une filière (23) disposée en aval dudit plateau, également animée d'un mouvement de rotation relatif par rapport audit jonc (3) autour dudit axe longitudinal et dans le même sens que ledit support (21) et ledit plateau (22), et traversée par ledit jonc (3) en translation et par lesdits rubans (5) provenant dudit plateau (22), lesdits rubans (5) étant insérés dans lesdites rainures en aval de ladite filière (23),
caractérisé en ce que ledit plateau (22) et ladite filière (23) présentent des ouvertures individuelles de passage (31, 53) pour chacun desdits rubans les traversant.

2. Dispositif selon la revendication 1, caractérisé en ce que les rubans sont inclinés par rapport audit axe longitudinal dudit jonc et par rapport audit plateau et à ladite filière.

3. Dispositif selon l'une des revendications 1 ou 2, caractérisé en ce que ledit plateau (22) est à symétrie de révolution autour dudit axe longitudinal de rotation (X-X′) et comporte une ouverture centrale (220), appartenant audit axe pour le passage dudit jonc (3) en translation longitudinale, et autant de séries (30) d'ouvertures (31) que de rainures (4) dudit jonc (3) à pourvoir de rubans (5), chacune desdites séries (30) comprenant au moins autant d'ouvertures (31) que le nombre maximal de rubans (5) pouvant être empilés dans une rainure, et lesdites séries (30) étant régulièrement réparties autour de ladite ouverture centrale (220).

4. Dispositif selon la revendication 3, caractérisé en ce que lesdites ouvertures (31) d'une série (30) sont alignées le long d'une droite.

5. Dispositif selon la revendication 4, caractérisé en ce que lesdites ouvertures (31) d'une série (30) sont alignées, en partant de la périphérie dudit plateau (22), le long d'une droite passant par le centre dudit plateau.

6. Dispositif selon l'une des revendications 1 à 5, caractérisé en ce que lesdites ouvertures (31) se prolongent à l'intérieur dudit plateau (22) par des canaux (32) de passage desdits rubans (5).

7. Dispositif selon la revendication 6, caractérisé en ce que lesdits canaux (32) d'une même série (30) d'ouvertures (31) forment un faisceau divergent en direction desdites bobines (211) de sorte qu'ils reçoivent lesdits rubans (5) en provenance desdites bobines (211) avec une orientation qui est sensiblement la même que celle qu'ils ont en sortant desdites bobines et que celle qu'ils auront en arrivant dans lesdites rainures (4).

8. Dispositif selon l'une des revendications 6 ou 7, caractérisé en ce que lesdites ouvertures (31) sont circulaires et lesdits canaux (32) cylindriques.

9. Dispositif selon l'une des revendications 1 à 8, caractérisé en ce que ladite filière (23) est à symétrie de révolution autour dudit axe longitudinal de rotation (X-X′), et comporte une ouverture centrale (230), appartenant audit axe, pour le passage dudit jonc (3) en translation longitudinale, et autant de grilles (50) que de rainures (4) dudit jonc (3) à pourvoir de rubans (5), chacune desdites grilles (50) comportant au moins autant de passages (53) que le nombre maximal de rubans (5) pouvant être empilés dans une rainure (4), lesdits passages (53) d'une grille (50) étant disposés les uns à la suite des autres et lesdites grilles (50) étant réparties régulièrement autour de ladite ouverture centrale (230).

10. Dispositif selon la revendication 9, caractérisé en ce que chacune desdites grilles (50) est constituée de deux piges cylindriques latérales (51) parallèles et d'autant de piges cylindriques transversales (52) que nécessaires pour former le nombre de passages (53) requis.

11. Dispositif selon l'une des revendication 9 ou 10, caractérisé en ce que les dimensions desdits passages (53) desdites grilles (50) sont sensiblement égales à celles de la section transversales desdits rubans (5).

12. Dispositif selon l'une des revendications 9 à 11, caractérisé en ce que lesdites grilles (50) présentent une symétrie par rapport à un axe parallèle auxdites piges latérales (51) et situé entre lesdites piges latérales (51) à égale distance desdites piges latérales (51), et en ce que ledit axe ne passe pas par le centre de ladite filière (23), de sorte que lesdits rubans (5) sont dirigés, à la sortie de ladite filière (23), dans la direction desdites rainures (4).

13. Dispositif selon la revendication 12, caractérisé en ce que chacun desdits axes de symétrie fait avec l'axe de symétrie de la grille voisine un angle inférieur à π/2, ledit angle étant compté positivement dans le sens de rotation relatif de ladite filière.

14. Dispositif selon l'une des revendications 1 à 13, caractérisé en ce que ledit jonc (3) est animé d'un mouvement de rotation autour de son axe longitudinal, et en ce que ledit support (21), ledit plateau (22) et ladite filière (23) sont immobiles.

15. Dispositif selon l'une des revendications 1 à 13, caractérisé en ce que ledit support (21), ledit plateau (22) et ladite filière (23) sont animés d'un mouvement de rotation autour dudit axe longitudinal, ledit jonc (3) étant immobile en rotation.

## Patentansprüche

1. Vorrichtung zum Einlegen von Bändern (5) aus Lichtleitfasern in die Spiralrillen eines gerillten Stabs (3), der entlang seiner Längsachse (X-X′) durch die Vorrichtung gezogen wird, wobei jede Rille mindestens zwei übereinandergestapelte Bänder aufnehmen soll und die Vorrichtung aufweist:
- ein Spulengestell (21), das in Relativdrehung bezüglich des Stabs (3) um die Längsachse versetzt wird,
- mehrere Vorratsspulen (211) für Bänder (5) auf dem Gestell (21),
- eine hinter dem Spulengestell liegende Platte (22), die ebenfalls in Relativdrehung bezüglich des Stabs (3) um die Längsachse versetzt wird, und zwar in gleicher Richtung wie das Gestell (21), und durch die der Stab (3) in Translationsrichtung und die von den Vorratsspulen (211) kommenden Bänder verlaufen,
- eine Ziehöse (23), die hinter der Platte liegt und ebenfalls in eine Relativdrehbewegung bezüglich des Stabs (3) um die Längsachse versetzt wird, und zwar in der gleichen Richtung wie das Gestell (21) und die Platte (22), und durch die der Stab (3) translatorisch und die von der Platte (22) kommenden Bänder (5) verlaufen, wobei die Bänder (5) in die Rillen hinter der Ziehöse (23) eingelegt werden, dadurch gekennzeichnet, daß die Platte (22) und die Ziehöse individuelle Öffnungen (31, 53) für den Durchlaß der einzelnen Bänder besitzen.

2. Vorrichtung nach Anspruch 1, dadurch gekennzeichnet, daß die Bänder bezüglich der Längsachse des Stabs und bezüglich der Platte und der Ziehöse geneigt sind.

3. Vorrichtung nach einem der Ansprüche 1 oder 2, dadurch gekennzeichnet, daß die Platte (22) drehsymmetrisch bezüglich der Längsdrehachse (X-X′) ist und eine zentrale Öffnung (220) entlang der Achse für den Durchlaß des Stabs (3) bei seiner Längsbewegung sowie eine Anzahl von Reihen (30) von Öffnungen (31) enthält, die der Zahl von mit Bändern (5) zu beschickenden Rillen (4) des Stabs (3) entspricht, wobei jede Reihe (30) mindestens eine Anzahl von Öffnungen (31) entsprechend der Maximalzahl von Bändern (5) aufweist, die in einer Rille gestapelt werden können, und wobei die Reihen (30) gleichmäßig um die zentrale Öffnung (220) herum angeordnet sind.

4. Vorrichtung nach Anspruch 3, dadurch gekennzeichnet, daß die Öffnungen (31) einer Reihe (30) entlang einer Geraden angeordnet sind.

5. Vorrichtung nach Anspruch 4, dadurch gekennzeichnet, daß die Öffnungen (31) einer Reihe (30) ausgehend von der Peripherie der Platte (22) entlang einer Geraden angeordnet sind, die durch das Zentrum der Platte verläuft.

6. Vorrichtung nach einem der Ansprüche 1 bis 5, dadurch gekennzeichnet, daß die Öffnungen (31) sich innerhalb der Platte (22) in Kanälen (32) fortsetzen, durch die die Bänder (5) verlaufen.

7. Vorrichtung nach Anspruch 6, dadurch gekennzeichnet, daß die Kanäle (32) einer Reihe (30) von Öffnungen (31) ein divergierendes Bündel in Richtung der Vorratsspulen (211) bilden, so daß sie die Bänder von den Vorratsspulen (211) mit einer Orientierung empfangen, die im wesentlichen die gleiche ist, die sie beim Abzug von diesen Spulen besaßen und die sie beim Einlegen in die Rillen (4) haben werden.

8. Vorrichtung nach einem der Ansprüche 6 oder 7, dadurch gekennzeichnet, daß die Öffnungen (31) kreisförmig und die Kanäle (32) zylindrisch sind.

9. Vorrichtung nach einem der Ansprüche 1 bis 8, dadurch gekennzeichnet, daß die Ziehöse um die Längsdrehachse (X-X′) drehsymmetrisch ausgebildet ist und eine zentrale Öffnung (230) entlang der Achse für den Durchlaß des Stabs (3) in seiner Längsbewegung sowie ebensoviele Gitter (50) enthält, wie es Rillen (4) im Stab (3) mit Bändern (5) zu beschicken gilt, wobei jedes der Gitter (50) mindestens ebensoviele Durchlässe (53) besitzt, wie höchstens Bänder (5) in einer Rille (4) gestapelt werden können, und daß die Durchlässe (53) eines Gitters (50) hintereinander und die Gitter (50) gleichmäßig um die zentrale Öffnung (230) herum angeordnet sind.

10. Vorrichtung nach Anspruch 9, dadurch gekennzeichnet, daß jedes der Gitter (50) aus zwei zylindrischen und parallelen Seitenstegen (51) und aus ebensovielen zylindrischen Querstegen (52) besteht, wie zur Bildung der erforderlichen Anzahl von Durchlässen (53) benötigt werden.

11. Vorrichtung nach einem der Ansprüche 9 oder 10, dadurch gekennzeichnet, daß die Abmessungen der Durchlässe (53) in den Gittern (50) im wesentlichen den Querschnittsmaßen der Bänder (5) gleichen.

12. Vorrichtung nach einem der Ansprüche 9 bis 11, dadurch gekennzeichnet, daß die Gitter (50) eine Symmetrie bezüglich einer parallel zu den Seitenstegen (51) und zwischen diesen in gleichem Abstand von ihnen verlaufenden Achse aufweisen und daß diese Achse nicht durch das Zentrum der Ziehöse (23) verläuft, so daß die Bänder (5) am Ausgang der Ziehöse (23) in Richtung der Rillen (4) verlaufen.

13. Vorrichtung nach Anspruch 12, dadurch gekennzeichnet, daß jede der Symmetrieachsen mit der Symmetrieachse des Nachbargitter einen Winkel kleiner als π/2 einschließt, wobei dieser Winkel positiv in der relativen Drehrichtung der Ziehöse gerechnet wird.

14. Vorrichtung nach einem der Ansprüche 1 bis 13, dadurch gekennzeichnet, daß der Stab (3) in eine Drehbewegung um seine Längsachse versetzt wird und daß das Gestell (21), die Platte (22) und die Ziehöse (23) drehfest sind.

15. Vorrichtung nach einem der Ansprüche 1 bis 13, dadurch gekennzeichnet, daß das Gestell (21), die Platte (22) und die Ziehöse (23) in eine Drehbewegung um die Längsachse versetzt werden, während der Stab (3) selbst drehfest ist.

## Claims

1. Device for inserting optical fibre ribbon cables (5) into the helical grooves of a grooved rod (3) moved in translation along its longitudinal axis (X-X′) through said device, each of said grooves being adapted to receive at least two ribbon cables stacked on top of each other, said device including:
- a spool support (21) rotating relative to said rod (3) about said longitudinal axis,
- a plurality of feed spools (211) for ribbon cables (5) mounted on said support (21),
- a plate (22) on the downstream side of said spool support, adapted to rotate relative to said rod (3) about said longitudinal axis and in the same direction as said support (21) and through which said rod (3) and said ribbon cables (5) from said spools (21) pass in translation, and
- a die (23) on the downstream side of said plate adapted to rotate relative to said rod (3) about said longitudinal axis and in the same direction as said support (21) and said plate (22) and through which said rod (3) and said ribbon cables (5) from said plate (22) move in translation, said ribbon cables (5) being inserted in said grooves on the downstream side of said die (23),
characterised in that said plate (22) and said die (23) have individual openings (31, 53) for each of said ribbon cables to pass through.

2. Device according to claim 1 characterised in that the ribbon cables are inclined to said longitudinal axis of said rod and to said plate and said die.

3. Device according to claim 1 or claim 2 characterised in that said plate (22) has symmetry of revolution about said longitudinal rotation axis (X-X′) and has a central opening (220) on said axis through which said rod (3) passes in longitudinal translation, and as many series (30) of openings (31) as there are grooves (4) in said rod (3) to contain ribbon cables (5), each of said series (30) comprising at least as many openings (31) as the maximal number of ribbon cables (5) that can be stacked in a groove, and said series (30) being equi-angularly spaced around said central opening (220).

4. Device according to claim 3 characterised in that said openings (31) of a series (30) are aligned along a straight line segment.

5. Device according to claim 4 characterised in that said openings (31) of a series (30) are aligned, starting from the periphery of said plate (22), along a straight line segment passing through the centre of said plate.

6. Device according to any one of claims 1 to 5 characterised in that said openings (31) are extended inside said plate (22) by passages (32) for said ribbon cables (5).

7. Device according to claim 6 characterised in that said passages (32) of the same series (30) of openings (31) form a bundle diverging towards said spools (211) so that they receive said ribbon cables (5) from said spools (211) with an orientation which is substantially the same as that which they have on leaving said spools and that which they will have on reaching said grooves (4).

8. Device according to claim 6 or claim 7 characterised in that said openings (31) are circular and said passages (32) are cylindrical.

9. Device according to any one of claims 1 to 8 characterised in that said die (23) has symmetry of revolution about said longitudinal rotation axis (X-X′) and includes a central opening (230) on said axis for said rod (3) to pass through in longitudinal translation and as many grids (50) as grooves (4) of said rod (3) to contain ribbon cables (5), each of said grids (50) including at least as many passages (53) as the maximal number of ribbon cables (5) that can be stacked in a groove (4), said passages (53) of a grid (50) being disposed one after the other and said grids (50) being equi-angularly spaced around said central opening (230).

10. Device according to claim 9 characterised in that each of said grids (50) comprises two parallel lateral cylindrical pegs (51) and as many transverse cylindrical pegs (52) as are required to form the required number of passages (53).

11. Device according to claim 9 or claim 10 characterised in that the dimensions of said passages (53) of said grids (50) are substantially equal to those of the transverse section of said ribbon cables (5).

12. Device according to any one of claims 9 to 11 characterised in that said grids (50) are symmetrical about an axis parallel to said lateral pegs (51) and situated halfway between said lateral pegs (51), and in that said axis does not pass through the centre of said die (23) with the result that said ribbon cables (5) are directed on leaving said die (23) in the direction of said grooves (4).

13. Device according to claim 12 characterised in that each of said axes of symmetry is at an angle to said axis of symmetry of the adjacent grid less than π/2, said angle being measured in the positive sense in the direction of relative rotation of said die.

14. Device according to any one of claims 1 to 13 characterised in that said rod (3) is rotated about its longitudinal axis and in that said support (21), said plate (22) and said die (23) do not rotate.

15. Device according to any one of claims 1 to 13 characterised in that said support (21), said plate (22) and said die (23) are rotated about said longitudinal axis and said rod (3) does not rotate.
